Europäisches Patentamt

(19) European Patent Office  (11) Publication number: **0 248 481**
   Office européen des brevets                                **B1**

(12) **EUROPEAN PATENT SPECIFICATION**

(45) Date of publication of the patent specification:  (51) Int. Cl.⁵: **B32B 27/32**, C08K 3/24,
   25.07.90                                                     C08L 23/08, C09J 123/08

(21) Application number: **87200993.1**

(22) Date of filing: **26.05.87**

(54) **Film with sealable layer.**

(30) Priority: **02.06.86 NL 8601412**          (73) Proprietor: **STAMICARBON B.V., Mijnweg 1, NL-6167 AC Geleen(NL)**

(43) Date of publication of application:
   **09.12.87 Bulletin 87/50**               (72) Inventor: **Engels, Johannes Carolus Augustinus, Heistraat 2, NL-6136 BD Sittard(NL)**

(45) Publication of the grant of the patent:
   **25.07.90 Bulletin 90/30**

(84) Designated Contracting States:
   **AT BE CH DE ES FR GB GR IT LI LU NL SE**

(56) References cited:
   **FR-A- 2 444 062**
   **FR-A- 2 532 652**
   **US-A- 4 117 193**

   **PATENT ABSTRACTS OF JAPAN, vol. 5, no. 124, page 71 C 66; & JP-A-56 59 864 (KIYOUWA KAGAKU KOGYO K.K.) 23-05-1981**

## Description

The invention relates to a film provided with at least one sealable layer, which sealable layer comprises a copolymer of ethylene and one or more 1-alkenes.

In the packaging industry frequent use is made of films, and particularly of (thermoplastic) synthetic films, which are locally sealed together in the production and closure of the packaging by heating the films at these places above the softening point and pressing them together. In the process frequent use is made of multi-layer films, the adhesion of the seal being provided by a sealable layer specially applied for that purpose to the packaging layer proper.

As material for the sealable layer various plastics have been proposed, such as low-density polyethylene, random copolymer of ethylene and propylene, and a copolymer of ethylene and a 1-alkene with at least four carbon atoms in the molecule, as known from EP-A 2606.

When sealing films together, only the sealable layer must be sealed and the packaging layer proper must remain unaffected by the sealing process so as not to influence the desired properties of the packaging layer unfavourably. That is why the greatest possible difference is aimed at between the sealing temperature and the softening point of the packaging layer. This in fact amounts to aiming at the lowest possible sealing temperature. The lowest possible sealing temperature is desirable also from an economic point of view, because at such temperature the cycle time is substantially shorter than at high sealing temperatures. This again results in an increase in output.

In the sealing together of films coated with low-density polyethylene or with the random copolymer of ethylene and propylene the sealing temperature is about 125-145°C. The difference between the sealing temperature and the softening point of the packaging layer is then in the order of only 15-25°C, which makes the setting of the sealing equipment highly critical. With films coated with the copolymer described in EP-A 2606 this difference is slightly greater according to the typical embodiments, about 25-30°C. The fact is that the incorporation of the comonomer described in these embodiments is not higher than about 10% (wt), although with a higher incorporation a further lowering of the sealing temperature can be achieved. However, the disadvantage of applying a higher incorporation is that the films coated with such a copolymer will block already at ambient temperature, which presents difficulties in the processing of the films and of the products made hereof.

It is known that this fault can be dealt with by adding a so-called anti-blocking agent (for instance in the form of a powder) to the plastic. With multi-layer films the problem, however, is that owing to the low thickness of the coating serving as sealable layer the sealing temperature is increased as a result of the relatively large grain of the customary antiblocking agents compared with this thickness. This can be met by a greater chosen thickness of the sealable layer, but this means an increase in cost and a deterioration of the processing characteristics, which is not compensated by an appreciable lowering of the sealing temperature.

It can also be met by choosing an antiblocking agent having a smaller grain size. However, the customary, commercially available antiblocking agents have an average grain size (about 4 μm) larger than the customary sealable layer (about 3 μm). If these could be successfully obtained in a finer variety, larger amounts would have to be added to the plastic from which the sealable layer is formed in order to achieve an effective antiblocking action. Owing to these larger amounts, the optical properties of the film will be worse, i.e. the gloss will be lower and the opacity in particular be higher.

The invention now provides a film of the kind mentioned in the opening lines with a substantial lowering of the sealing temperature being achieved owing to a higher incorporation of the comonomer, the tendency of the film to block being suppressed without unfavourably affecting the sealing temperature and the optical properties, and with the possibility of applying very thin sealable layers. This has been achieved in that, according to the invention, the ethylene copolymer contains at least 2.5 moles% 1-alkene and in that, calculated on the copolymer, 0.1–10% (wt) hydrotalcite with the empirical formula of $Mg_{1-x}Al_x(OH)_2 A_{x/n}^{n-} \cdot mH_2O$, where $0 < x \leq 0.5$, $A^{n-}$ is an anion with exceeding the thickness of the sealable layer and a distribution of the average particle size with a standard deviation $\sigma < 0.5$ y has beed added to the copolymer. Preference is given to 0.5–5% (wt) hydrotalcite calculated on the total copolymer.

This kind of hydrotalcite is known from DE-A 2 950 489, in which its use as a halogen-binding agent is described. It has surprisingly been found that hydrotalcite having a formula and a particle size as described hereinbefore, added, in amounts of 0.1–10% (wt) calculated on the total copolymer, to a copolymer of ethylene and at least 2.5 moles% of a 1-alkene with at least four carbon atoms, provides a composition that can be applied to substrates as a sealable layer with strongly reduced blocking tendency and with low thickness (for instance lower than 3 μm) while retaining a low sealing temperature and optical properties.

The anion of the hydrotalcite used in the invention is preferably a carbonate. Further, the average particle size must not exceed the thickness of the sealing layer and is preferably smaller than 2.5 μm, particularly smaller than 2 μm, more particularly smaller than 1 μm. It is to be recommended at the same time for the chosen specifice BET surface not to be greater than 100 $m^2$/g, preferably to be smaller than 80 $m^2$/g and particularly smaller than 60 $m^2$/g. In order to reach an optimum sealing temperature, prefer-

2

ence should be given to an ethylene/1-alkene copolymer with at least 3 and in particular 3.5 moles% comonomer incorporated in it. The 1-alkene applied may very well be 1-octene.

A sealable layer according to the invention is suitable for use on various packaging layers, for instance paper, aluminium or preferably plastics. Particularly suitable is the use in which a biaxially oriented polypropylene film is provide, as the packaging layer proper, with one or more sealable layers according to the invention.

If so desired, the sealable layer may also contain additives like lubricants, etc.

The invention will now be elucidated by means of a few examples without, however, being limited thereto.

## Examples

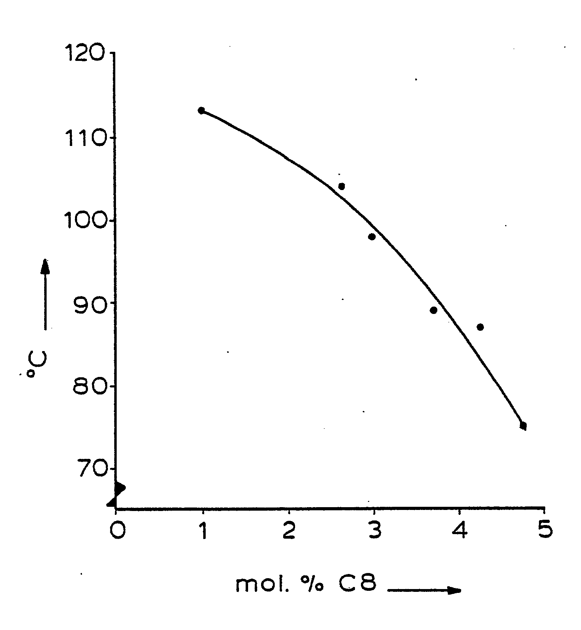

A multi-layer cast film was made by coextrusion from propylene homopolymer with a melt index of 2.0 (at 230°C and 2.16 kg), layer thickness 20 μm, provided on both sides with a 2-μm-thick layer of ethylene-octene copolymer with an incorporation percentage as indicated in the figure and in the table.

The seal was produced by exercising a pressure of 30 N/cm² for 6 sec. at such a temperature that the strength of the seal was 2.5 N/cm. In order to prevent the film (provided on 2 sides with a sealable layer) from getting stuck to the sealing bar, the surface of contact of the sealing bar was provided with a 25 μm-thick film of Cellophane®.

The hydrotalcite applied was a compound with the formula $Mg_{4,5}Al_2(OH)_{13}CO_3 \cdot 3,5H_2O$ of the firm of Kyowa Chemical Industry Co., Ltd., having an average particle size smaller than 1 mm and a specific BET surface of 15 m²/g. The customary antiblocking agent applied was Sylobloc 45®, structural formula $SiO_2$, of the firm of Grace GmbH, having an average particle size of 4 μm and a specific BET surface of 500 m²/g.

The figure shows the relationship between the sealing temperature (vertical axis) and the mole% of octene incorporated in the ethylene-octene copolymer (horizontal axis).

In the table the incorporation in moles% and also the kinds and the amounts (% by wt) of antiblocking agents are shown.

The figures mentioned are the averages of a plurality of experiments. The gloss was determined according to ASTM D 2457 (45¤C), the opacity according to ASTM D 1003.

In order to determine the blocking tendency, the force was measured required to pull two films, one laid on top of the other, apart in a direction perpendicular to the surface of contact. This must be low.

TABLE 1

| example | mole % octene in sealing layer | hydrotalcite % (wt) | Sylobloc 45® % (wt) | sealing temp. °C | gloss %. | opacity % | blocking cN |
|---|---|---|---|---|---|---|---|
| comp. 1 | – | – | – | – | 100 | 0.3 | 3 |
| comp. 2 | 3.8 | 0 | 0 | 89 | 97 | 0.3 | 148 |
| I | 3.8 | 2.0 | 0 | 89 | 89 | 1.7 | 40 |
| comp. 3 | 4.3 | 0 | 0 | 87 | 92 | 1.3 | 109 |
| II | 4.3 | 1.0 | 0 | 86 | 91 | 1.5 | 11 |
| III | 4.3 | 2.0 | 0 | 90 | 88 | 1.7 | 3 |
| comp. 4 | 4.3 | 0 | 0.2 | 110 | 91 | 2.3 | 1 |
| IV | 4.8 | 1.0 | 0 | 75 | – | – | – |

In comparative example 1 the optical and blocking characteristics have been measured of a polymer film not provided with any sealable layer, but further identical to the polypropylene layer in the multi-layer film provided with sealable layers in the other examples.

Comparative example 2 and example I show that the sealing temperature is not influenced by the hydrotalcite, while the antiblocking action is effective and the optical properties, particularly the opacity, are not appreciably affected.

This is apparent also from comparative example 3 and examples II and III.

Comparative example 4 shows that a normally used amount of customary antiblocking agent, which is only one tenth of the amount of hydrotalcite in example III, causes the sealing temperature to increase considerably, while the optical properties, particularly the opacity, become worse.

These examples show that the invention provides a sealable layer with a low sealing temperature which has no undesired blocking properties and which does not have a negative effect on the optical characteristics of the film.

EP 0 248 481 B1

## Claims

1. Film provided with at least one sealable layer, which sealable layer comprises a copolymer of ethylene containing at least 2.5 moles% of a 1-alkene with at least four carbon atoms, characterized in that the copolymer contains, calculated on the copolymer, 0.1–10% (wt) hydrotalcite with the empirical formula of $Mg_{1-x}Al_x(OH)_2A_{x/n}{}^{n-} \cdot mH_2O$, where $0 < x \le 0.5$, $A^{n-}$ is an anion with valence n, and $m \ge 0$, and with an average particle size y not exceeding the thickness of the sealable layer and a distribution of the average particle size with a standard deviation $\sigma < 0.5\ y$ has been added to the copolymer.

2. Film according to claim 1, characterized in that the 1-alkene is octene.

3. Film according to any one of claims 1–2, characterized in that the copolymer contains at least 3 moles% of the 1-alkene.

4. Film according to any one of claims 1–3, characterized in that the copolymer contains 0.5–5% (wt) hydrotalcite.

5. Film according to any one of claims 1–4, characterized in that the anion A from the hydrotalcite is a carbonate.

6. Film according to any one of claims 1–5, characterized in that the average particle size of the hydrotalcite is 2.5 µm at most.

7. Film according to claim 6, characterized in that the average particle size of the hydrotalcite is 2 µm at most.

8. Film according to any one of claims 1–7, characterized in that the specific BET surface of the hydrotalcite is 100 m²/g at most.

9. Film according to any one of claims 1–8, characterized in that the film is a plastic film.

10. Film comprising a biaxially oriented polypropylene film with a seatable layer applied to it on one or both sides according to any one of claims 1–8.

## Patentansprüche

1. Folie, die mit mindestens einer heißsiegelbaren Schicht versehen ist, welche heißsiegelbare Schicht ein Copolymer von Äthylen enthaltend mindestens 2,5 Mol% 1-Alken mit mindestens vier Kohlenstoffatomen umfaßt, dadurch gekennzeichnet, daß das Copolymer, bezogen auf das Copolymer, 0,1 bis 10% (Gew.) Hydrotalkit der empirischen Formel $Mg_{1-x}Al_x(OH)_2A_{x/n}{}^{n-} \cdot mH_2O$, wobei $0 < x \le 0.5$, $A^{n-}$ ein Anion mit der Wertigkeit n ist und $m \ge 0$, und mit einer mittleren Teilchengrösse y, die die Dicke der heißsiegelbaren Schicht nicht übersteigt, und einer Verteilung der mittleren Teilchengröße mit einer Standardabweichung $\sigma < 0,5\ y$ dem Copolymer zugegeben enthält.

2. Folie nach Anspruch 1, dadurch gekennzeichnet, daß das 1-Alken Octen ist.

3. Folie nach einem der Ansprüche 1 bis 2, dadurch gekennzeichnet, daß das Copolymer mindestens 3 Mol% 1-Alken enthält.

4. Folie nach einem der Ansprüche 1 bis 3, dadurch gekennzeichnet, daß das Copolymer 0,5 bis 5% (Gew.) Hydrotalkit enthält.

5. Folie nach einem der Ansprüche 1 bis 4, dadurch gekennzeichnet, daß das Anion A vom Hydrotalkit ein Carbonat ist.

6. Folie nach einem der Ansprüche 1 bis 5, dadurch gekennzeichnet, daß die mittlere Teilchengröße des Hydrotalkits höchstens 2,5 µm beträgt.

7. Folie nach Anspruch 6, dadurch gekennzeichnet, daß die mittlere Teilchengröße des Hydrotalkits höchstens 2 µm beträgt.

8. Folie nach einem der Ansprüche 1 bis 7, dadurch gekennzeichnet, daß die spezifische BET-Oberfläche des Hydrotalkits höchstens 100 m²/g beträgt.

9. Folie nach einem der Ansprüche 1 bis 8, dadurch gekennzeichnet, daß die Folie eine Kunststoffolie ist.

10. Folie umfassend eine biaxial orientierte Polypropylenfolie mit einer auf einer oder beiden Seiten aufgebrachten heißsiegelbaren Schicht nach einem der Ansprüche 1 bis 8.

## Revendications

1. Film muni d'au moins une couche scellable, ladite couche scellable comprend un copolymère d'éthylène qui contient au moins 2,5 moles% de 1-alcène avec au moins quatre atomes de carbone, caractérisé en ce que, calculé par rapport au copolymère, le copolymère contient 0,1–10% (pds) d'hydrotalcite de formule empirique $Mg_{1-x}Al_x(OH)_2A_{x/n}{}^{n-} \cdot mH_2O$, where $0 < x \le 0,5$, $A^{n-}$ est un anion de valence n, et $m \ge 0$, avec une taille moyenne de particule y en dépassant pas l'épaisseur de la couche scellable et une répartition de taille moyenne de particules avec un écart type $\sigma < 0,5\ y$, qui a été ajouté au copolymère.

2. Film selon la revendication 1, caractérisé en ce que le 1-alcène est l'octène.

3. Film selon l'une quelconque des revendications 1–2, caractérisé en ce que le copolymère contient au moins 3 moles% de 1-alcène.

4

4. Film selon l'une quelconque des revendications 1–3, caractérisé en ce que le copolymère contient 0,5–5% (pds) d'hydrotalcite.

5. Film selon l'une quelconque des revendications 1–4, caractérisé en ce que l'anion A de l'hydrotalcite est un carbonate.

6. Film selon l'une quelconque des revendications 1–5, caractérisé en ce que la taille moyenne de particule de l'hydrotalcite est de 2,5 µm au plus.

7. Film selon la revendication 6, caractérisé en ce que la taille moyenne de particule de l'hydrotalcite est 2 µm au plus.

8. Film selon l'une quelconque des revendications 1–7, caractérisé en ce que la surface spécifique BET de l'hydrotalcite est de 100 m²/g au plus.

9. Film selon l'une quelconque des revendications 1–8, caractérisé en ce que le film est un film de matière plastique.

10. Film constitué d'un film de polypropylène orienté biaxialement avec une couche scellable déposée sur lui, sur une face ou sur les deux selon l'une quelconque des revendications 1–8.